# EUROPEAN PATENT APPLICATION

(11) **EP 1 568 889 A2**
(43) Date of publication of application: **31.08.2005**
(21) Application number: 05004100.3
(22) Date of filing: 25.02.2005
(51) Int. Cl.: F04D 29/12

(54) **Shaft seal for use in high-speed turbomachinery**

(30) Priority: 27.02.2004 US 548806 P
(71) Applicant: R & D Dynamics Corporation, Bloomfield, CT 06002 (US)
(72) Inventor: Agrawal, Giridhari L., Simsbury, CT 06070 (US)
(74) Representative: Menges, Rolf

(57) **Abstract**

An improved and enhanced dynamic seal for use in high-speed turbomachinery includes an inner ring coupled to an outer sleeve. The coupling between the inner ring and the outer sleeve is strengthened by forming an increased surface area, exhibited by recesses, in at least one of the outer surface of the inner ring and the inner surface of the outer sleeve, and by providing an adhesive material in the recesses to bond the inner ring to the outer sleeve.

## Description

### Cross Reference To Related Application

This application claims the benefit of U.S. Provisional Application 60/548,806, filed February 27, 2004, which is incorporated herein by reference.

### Field of the Invention

This invention relates generally to dynamic seals for use in high-speed turbomachinery and more particularly to an improved and enhanced seal design employing an inner polymeric ring coupled to an outer metal sleeve mounted in a housing.

### Background of the Invention

There is a great need in high speed turbomachinery, such as air cycle machinery, to provide improved performance, lower cost, better maintainability, higher reliability, and increased safety. Designs of high-speed turbomachinery, and each component used therein, have incorporated several improvements over the last few decades. However, several current design aspects, while viable for operation, have room for improvement because of susceptibility to wear and / or failure under normal operating conditions. Failure of any system components can increase costs associated with repair and inspection, plus added operation downtime and increased safety risks.

One area of improvement involves retention of dynamic seals in high-speed turbomachinery systems. Historically, dynamic annular seals are used in such systems, such as air cycle machines, to minimize leakage of fluid and pressure from a high-pressure area to a low-pressure area. Typically, seals are mounted in a housing unit and accommodate a rotatable shaft or journal. The seals must remain stationary, especially when the shaft is rotating, and resist slipping. The seals are often basic dynamic seals having a radial clearance between the seal and the shaft on the order of 0.001 inches. Alternatively, rubbing seals or labyrinth seals are used, where there is some contact between the seal and the rotating shaft. In order for the seals to operate effectively, they must resist the forces exerted by the rotating shaft, as well as any forces created by the pressure difference between the areas on both sides of the seal.

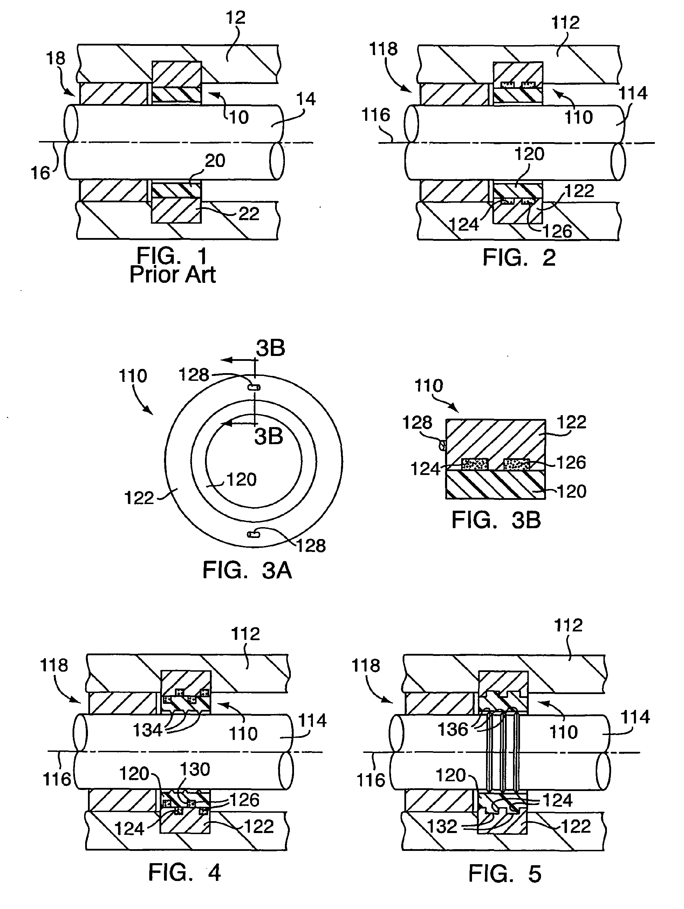

In many cases, the seals are constructed in two pieces. A common dynamic annular seal design is illustrated in FIG. 1. At least one dynamic seal 10 is mounted in a housing unit 12. A rotatable shaft or journal 14 is adapted for rotation about an axis 16 within the housing unit 12. In accordance with standard turbomachinery designs, the shaft 14 is preferably mounted for rotation within the housing unit 12 by journal bearings (one of which is generally designated by reference numeral 18). The seal 10 includes an inner ring 20 manufactured from a polymeric material, such as VESPEL® manufactured by DuPont, coupled to an outer metallic sleeve 22. The polymeric inner ring 20 is adjacent the rotating shaft 14, while the metallic sleeve 22 is mounted in the housing unit 12.

The design of FIG. 1 has become standard because the inner ring 20 is more flexible to withstand the forces exerted by the rotating shaft 14 while the rigid outer sleeve 22 ensures that the seal 10 stays stationary in the housing unit 12. Accordingly, retention of the polymeric inner ring within the metallic sleeve has always been an issue. Commonly, the inner ring is press fitted and / or glued into the metallic sleeve. The metallic sleeve is then retained in the housing, for example by press fit or by a few mounting pins. The inner surface of the metallic sleeve is typically smooth. Correspondingly, the outer surface of the polymeric inner ring is typically smooth as well. During operation, the rotating shaft will, on occasion, contact the inner ring. It has been determined that the inner ring is susceptible to separation from and slipping in the metal sleeve, which causes the inner ring to rotate with the shaft, thus causing failure or malfunction of the entire machine. In tests on the seal depicted in FIG. 1, it has been determined that the polymeric inner ring can be separated from the metallic outer sleeve by exerting less than 100 pounds, even where an adhesive, such as LOCTITE®-brand adhesive material, is used.

What is needed is a more reliable seal that will withstand rotating forces exerted by the rotating shaft, as well as high pressure differences between the areas on either side of the seal.

### Summary of the Present Invention

According to an aspect of the present invention, a dynamic seal for use in high-speed turbomachinery comprises an outer sleeve having a radially inner surface and an inner ring having a radially outer surface, where the inner ring is coaxially coupled with the outer sleeve so that the outer surface of the inner ring is adjacent the inner surface of the outer sleeve. At least one of the inner surface of the outer sleeve and the outer surface of the inner ring includes at least one recess formed therein.

In a preferred design of the present invention, an adhesive material is disposed within the at least one recess formed in either the outer sleeve or the inner ring to secure the inner ring to the outer sleeve.

According to another aspect of the present invention, the dynamic sleeve includes an outer sleeve having a radially inner surface coaxially coupled with an inner ring having a radially outer surface, where both the inner surface of the outer sleeve and the outer surface of the inner ring include recesses.

It is an object of the present invention to provide a reliable seal that will withstand rotating forces exerted by the rotating shaft, as well as high pressure differences between the areas on either side of the seal.

More particularly, it is an object of the present invention to strengthen the connection and bond between the inner ring and the outer sleeve forming the seal, and to exceed the level of torque required to break the fit between the inner ring and the outer sleeve (for example, by at least 2 to 3 times greater than the existing design).

It is also an object of the present invention to provide a seal design that is easy to manufacture in terms of time, labor, materials and cost.

### Brief Description of the Drawings

FIG. 1 generally illustrates a cross-sectional view of a prior art seal in a standard turbomachinery environment.

FIG. 2 generally illustrates a cross-sectional view of a seal in accordance with an embodiment of the present invention in a standard turbomachinery environment.

FIG. 3A is a side view of a seal in accordance with an embodiment of the present invention.

FIG. 3B is a cross-sectional view of the seal taken along line 3B-3B in FIG. 3A.

FIG. 4 is a cross-sectional view of a seal in accordance with another embodiment of the present invention in a standard turbomachinery environment.

FIG. 5 is a cross-sectional view of a seal in accordance with another embodiment of the present invention in a standard turbomachinery environment.

### Detailed Description of the Present Invention

Referring to FIG. 2, a portion of a high-speed turbomachinery system is shown in cross-section, and includes at least one dynamic seal 110 mounted in a housing unit 112. A rotatable shaft or journal 114 is adapted for rotation about an axis 116 within the housing unit 112. In accordance with standard turbomachinery designs, the shaft 114 is preferably mounted for rotation within the housing unit 112 by journal bearings (one of which is generally designated by reference numeral 118).

A preferred construction of the seal 110 is shown in more detail in FIGS. 3A and 3B. The seal 110 comprises an inner ring 120 and an outer sleeve 122 coaxially coupled together. The inner ring 120 is preferably more flexible than the outer sleeve 122, and is constructed from a polymeric material, such as VESPEL® manufactured by DuPont. The outer sleeve 122 is preferably more rigid than the inner ring 120, and accordingly is constructed from a metallic material. As shown in FIG. 3B, the outer sleeve 122 is provided with recesses, such as circumaxial grooves 124, in its inner surface. The grooves 124 are preferably about 0.002 to 0.010 inches deep and extend around the entire inner circumference of the outer sleeve 122. An adhesive material 126, such as LOCTITE®-brand adhesive material, is provided in the grooves 124, and the inner ring 120 is press-fitted within the outer sleeve 122 to form the seal 110. The adhesive 126, combined with the press fit, act to hold the inner ring 120 in place within the outer sleeve 122. The adhesive 126 may also be provided between adjacent surfaces of the inner ring 120 and the outer sleeve 122.

It has been determined that the bond between the inner ring 120 and the outer sleeve 122 of the present invention, by providing an adhesive 126 in grooves 124, is strengthened. At least 2 to 3 times greater an amount of torque is required to break the fit between the inner ring 120 and the outer sleeve 122 in the design of FIG. 2 than for the prior art design shown in FIG. 1.

As shown in FIGS. 3A and 3B, the outer sleeve 122 is also provided with a plurality of mounting pins 128 to hold the seal 110 in place within the housing unit 112. Alternatively, the seal 110 could be held in the housing unit 112 by press fit, adhesive, or a combination thereof, though the inclusion of mounting pins 128 is preferred.

Though two circumaxial grooves 124 are shown, the present invention has utility with one or more grooves. The grooves provide a more reliable and stronger fit between the inner ring 120 and the outer sleeve 122 of the present invention because of the increased surface area along the inner surface of the outer sleeve 122.

In the prior art design, as shown in FIG. 1, the inner surface of the outer sleeve 22 is smooth. Because outer sleeves of dynamic seals of the general design used in the industry are typically manufactured from rigid metal, the fit between the outer sleeve 22 and the inner ring 20, though tight and accepted, is susceptible to slipping once sufficient force is exerting on the inner ring 20 (e.g., by contact between the rotating shaft 14 and the inner ring 20). Further, typical adhesives, such as LOCTITE®-brand adhesive material, create weaker bonds with smooth metallic surfaces than with other materials and surfaces. With a press fir, the smooth inner surface of the outer sleeve 22 and the smooth outer surface of the inner ring 20 usually leave little space for adhesive. If the surface is too narrow, the amount of adhesive used may be limited. Conversely, where no press fit is used, there may be a space between the inner ring 20 and the outer sleeve 22. If the space is not sufficiently filled with adhesive, there may be undesirable leakage of fluid and pressure. Additionally, the problems with using adhesive on a smooth metallic surface may be experienced.

Accordingly, the present invention preferably provides grooves 124 in the inner surface of the outer sleeve 122 to improve the bond and fit between the outer sleeve 122 and the inner ring 120. Alternative recessed designs are also envisioned by the present invention, such as chevrons, cross-hatches, knurling, sinusoidal waves, teeth, roughened surfaces, partial grooves, or basically any designs which increase the surface area of the inner surface of the outer sleeve 122, and create recesses for adhesive 126, as well as peaks or raised portions for contacting and securing the inner ring 120 in place by press fit.

In alternate designs, the inner ring 120 may be provided with recesses that increase the surface area of the outer surface of the inner ring 120, such as grooves 130 shown in FIG. 4. Adhesive 126 may likewise be provided in the grooves 130 of the inner ring 120 so that the inner ring 120 can be coupled to an outer sleeve 122 either having a smooth inner surface, or a similarly grooved or recessed inner surface design. Where both the inner ring 120 and the outer sleeve 122 are provides with grooves 130 and 124, respectively, the grooves 130 of the inner ring 120 need not be aligned with the grooves 124 of the outer sleeve 122, though such alignment is certainly viable for the present invention.

In yet another alternate design, as illustrated in FIG. 5, the inner ring 120 may be provided with projections 132 complementing the grooves 124 of the outer sleeve 122. The projections 132 may be designed to interlock with the grooves 124 and therefore couple the inner ring 120 and the outer sleeve 122 together by press fit. Alternatively, and indeed more preferably, the projections 132 may be smaller in cross-section than the grooves 124 so that adhesive 126 can be disposed in spaces within the grooves 124 to fit and bond the inner ring 120 in the outer sleeve 122. In these alternative designs, the inner ring 120 must be a flexible material so that the projections 132 can be snap-fitted into the grooves 122 during manufacture of the seal 110.

As is generally known in the art, the seal 110 may be a rubbing seal, which contacts the shaft 114, or a simple dynamic seal with a clearance between the seal and the shaft 114 (e.g., 0.001 inches). Alternatively, the seal 110 may be a labyrinth seal, including generally flexible labyrinth projections 134 on its inner surface, as illustrated in FIG. 4. Further, or alternatively, generally flexible labyrinth projections 136 may be provided on the shaft 114, as illustrated in FIG. 5.

The foregoing description of embodiments of the present invention has been presented for the purpose of illustration and description, and is not intended to be exhaustive or to limit the present invention to the form disclosed. As will be recognized by those skilled in the pertinent art to which the present invention pertains, numerous changes and modifications may be made to the above-described embodiments without departing from the broader aspects of the present invention.

## Claims

1. A seal for use in high-speed turbomachinery, comprising:
an outer sleeve having a radially inner surface;
an inner ring having a radially outer surface coaxially coupled with the outer sleeve so that the outer surface of the inner ring is adjacent the inner surface of the outer sleeve, and wherein at least one of the inner surface of the outer sleeve and the outer surface of the inner ring includes at least one recess formed therein; and
an adhesive material disposed within the at least one recess to secure the inner ring to the outer sleeve.

2. The seal of claim 1, wherein at least one of the inner surface of the outer sleeve and the outer surface of the inner sleeve include a plurality of groove-shaped recesses formed therein.

3. The seal of claim 1, wherein the at least one recess is formed by a roughened inner surface of the outer sleeve.

4. The seal of claim 1, wherein the at least one recess is formed by a roughened outer surface of the inner ring.
